# EUROPEAN PATENT APPLICATION

(11) **EP 4 369 678 A1**
(43) Date of publication of application: **15.05.2024**
(21) Application number: 23209243.7
(22) Date of filing: 10.11.2023
(51) Int. Cl.: H04L 41/0866, H04L 41/0873, H04L 41/0894

(54) **CONFLICT MANAGEMENT OF FUNCTIONS AND SERVICES**

(30) Priority: 14.11.2022 US 202263383646 P; 26.09.2023 US 202318474963
(71) Applicant: Juniper Networks, Inc., Sunnyvale, CA 94089 (US)
(72) Inventor: AKMAN, Arda, Sunnyvale, 94089 (US); SAHIN, Burcu, Sunnyvale, 94089 (US)
(74) Representative: D Young & Co LLP

(57) **Abstract**

Techniques are described for providing conflict management of functions and services, for example, of a RAN intelligent controller (RIC). For example, a non-real time (non-RT) RIC comprises one or more processors and a memory coupled to the one or more processors, the memory storing instructions to cause the one or more processors to receive, from an application, a request to perform a service using an interface of the non-RT RIC. The instructions further cause the one or more processors to determine whether the service has a conflict. The instructions also cause the one or more processors to perform an action to address the conflict based on the determination that the service has a conflict.

## Description

This application claims the benefit of US Patent Application No. 18/474,963, filed 26 September 2023 and of US Provisional Patent Application No. 63/383,646, filed 14 November 2022, the entire content of each application is incorporated herein by reference.

### TECHNICAL FIELD

The disclosure relates to computer networking, and to conflict management of functions and services of a controller.

### BACKGROUND

Computer networks have become ubiquitous, and the number of network applications, network-connected devices, and types of network-connected devices are rapidly expanding. Such devices now include computers, smartphones, Internet-of Things (IoT) devices, vehicles, medical devices factory equipment, etc. 5G mobile network architectures enhanced the ability to provide communication services using cloud-based network function virtualization (NFV). Specialized networks can be created using the Radio Access Network (RAN) of a mobile network operator combined with functions of a 5G core. For example, networks can be created for a specific service level agreement (SLA), special use cases, or other specific requirements. Examples of such networks include private mobile networks, industrial networks, a dedicated network for connected vehicles, etc.

### SUMMARY

Particular embodiments are set out in the independent claims. Various optional examples are set out in the dependent claims. In general, the disclosure describes techniques for conflict management of functions and services, for example, of a RAN Intelligent Controller (RIC) for a RAN of a mobile network. For example, a network system may include a Service Management and Orchestration (SMO) framework offering various framework functions along with a non-real-time (non-RT) RIC, configured in accordance with Open Radio Access Network (O-RAN) standards ("O-RAN architecture"), to manage and/or monitor aspects of a RAN and/or 5G core. The O-RAN architecture may include a non-RT RIC and a near-real-time RIC (near-RT RIC) that each executes different functions and services for RAN functions. For example, the non-RT RIC is an orchestration and automation function configured to provide radio resource management, higher layer procedure optimization, policy optimization, and provide guidance, parameters, policies and AI/ML models to support the operation of near-RT RIC functions in the RAN. The non-RT RIC may onboard one or more applications (e.g., rApps) that provide non-real time (e.g., greater than one second) control of RAN elements and their resources, and the near-RT RIC may onboard one or more applications (e.g., xApps) that provide near-real time control of RAN elements and their resources. The O-RAN architecture includes several interfaces, such as A1, O1, and O2 interfaces, that are each used to provide the functions and services by which the SMO and RIC can configure or direct other components of the RAN. For example, the functions and services of a non-RT RIC may include policy management services and/or enrichment information services for a near-RT RIC that are provided over an A1 interface (collectively referred to herein as "A1 services" because they provided over the A1 interface); Operations, Administration, and Management (OAM) services, such as performance management services and configuration management services, for O-RAN management elements that are provided over an O1 interface (referred to herein as "O1 services" because they are provided over the O1 interface); infrastructure management services and deployment management services for resources of an O-RAN cloud that are provided over an O2 interface (referred to herein as "O2 services" because they are provided over the O2 interface), and/or other services, such as service management and exposure (SME) services (e.g., registration of a service, update of a service registration), data management and exposure (DME) services, and/or AI/ML services. According to the techniques disclosed herein, the non-RT RIC may include one or more microservices configured to provide conflict management of these functions and services.

In accordance with the techniques of this disclosure, the non-RT RIC may provide conflict management of A1 services. For example, a conflict manager of the non-RT RIC may receive a request from an application to perform an A1 service (e.g., create or update a policy of the application) and determine whether the A1 service has a conflict. Based on the determination of whether the A1 service has a conflict, the non-RT RIC may perform an action to address the conflict (e.g., by implementing (or not implementing) the policy of the application based on conflict management rules). In some examples, the non-RT RIC may provide conflict management for O1 services. For example, the conflict manager of the non-RT RIC may receive a request from an application to perform an O1 service (e.g., implement configuration changes of RAN elements, create a performance job, etc.) and determine whether the O1 service has a conflict. Based on the determination of whether the O1 service has a conflict, the non-RT RIC may perform an action to address the conflict (e.g., by implementing (or not implementing) the configuration changes based on conflict management rules). In some examples, the non-RT RIC may provide conflict management for O2 services. For example, the conflict manager of the non-RT RIC may receive a request from an application to perform an O2 service (e.g., implement configuration changes of resources of the O-RAN cloud) and determine whether the O2 service has a conflict. Based on the determination of whether the O2 service has a conflict, the non-RT RIC may perform an action to address the conflict (e.g., by implementing (or not implementing) the configuration based on conflict management rules). In some examples, the non-RT RIC may provide conflict management for other services, such as SME services (e.g., registration of service, update of service registration), DME services, and/or AI/ML services.

The techniques may provide one or more technical advantages that realize at least one practical application. For example, the techniques in this disclosure may provide conflict management in a RAN and more particularly, for a non-RT RIC deployed according to the O-RAN framework. Moreover, the techniques in this disclosure may provide a configurable conflict management system such that an operator may configure various settings of the conflict management system, such as the implementation of specific conflict management rules.

In one example, the techniques describe a non-real time (non-RT) Radio Access Network Intelligent Controller (RIC) for a radio access network (RAN), the non-RT RIC comprising one or more processors, and a memory coupled to the one or more processors, the memory storing instructions to cause the one or more processors to: receive, from an application, a request to perform a service using an interface of the non-RT RIC; determine whether the service has a conflict; and perform an action to address the conflict based on the determination that the service has a conflict.

In another example, the techniques describe a method comprising: receiving, by a non-real time (non-RT) Radio Access Network Intelligent Controller (RIC) for managing non-real time events of a radio access network (RAN) and from an application, a request to perform a service using an interface of the non-RT RIC: determining, by the RIC, whether the service has a conflict; and performing, by the RIC, an action to address the conflict based on the determination that the service has a conflict.

In another example, the techniques describe a non-transitory computer-readable storage media that comprises instructions that, when executed, cause one or more processors of a non-real time (non-RT) Radio Access Network Intelligent Controller (RIC) for managing non-real time events of a radio access network (RAN) to: receive, from an application, a request to perform a service using an interface of the non-RT RIC; determine whether the service has a conflict; and perform an action to address the conflict based on the determination that the service has a conflict.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram illustrating an example network system configured to provide conflict management of functions and services of a RAN, in accordance with one or more techniques of the disclosure.
FIG. 1B is a block diagram illustrating further example details of the Non-RT RIC of the Service Management and Orchestration of FIG. 1A.
FIG. 2A is a block diagram illustrating an example non-RT RIC providing conflict management of A1 services, in accordance with one or more techniques of this disclosure.
FIG. 2B is a flow diagram of an example conflict management of an A1 service, in accordance with one or more techniques of the disclosure.
FIG. 3A is a block diagram illustrating an example non-RT RIC providing conflict management of O1 services, in accordance with one or more techniques of this disclosure.
FIG. 3B is a flow diagram of an example conflict management of an O1 service, in accordance with one or more techniques of the disclosure.
FIG. 4 is a block diagram illustrating an example non-RT RIC providing conflict management of O2 services, in accordance with one or more techniques of this disclosure.
FIG. 5A is a block diagram illustrating an example non-RT RIC providing conflict management of SME services, in accordance with one or more techniques of this disclosure.
FIG. 5B is a flow diagram of an example conflict management of an SME service, in accordance with one or more techniques of the disclosure.
FIG. 5C is a flow diagram illustrating another example conflict management of an SME service, in accordance with one or more techniques of the disclosure.
FIG. 6 is a flow diagram of an example operation of a RIC configured to perform conflict management, in accordance with the techniques described in this disclosure.
FIG. 7 is a block diagram illustrating an example computing system in detail, in accordance with the techniques of this disclosure.

### DETAILED DESCRIPTION

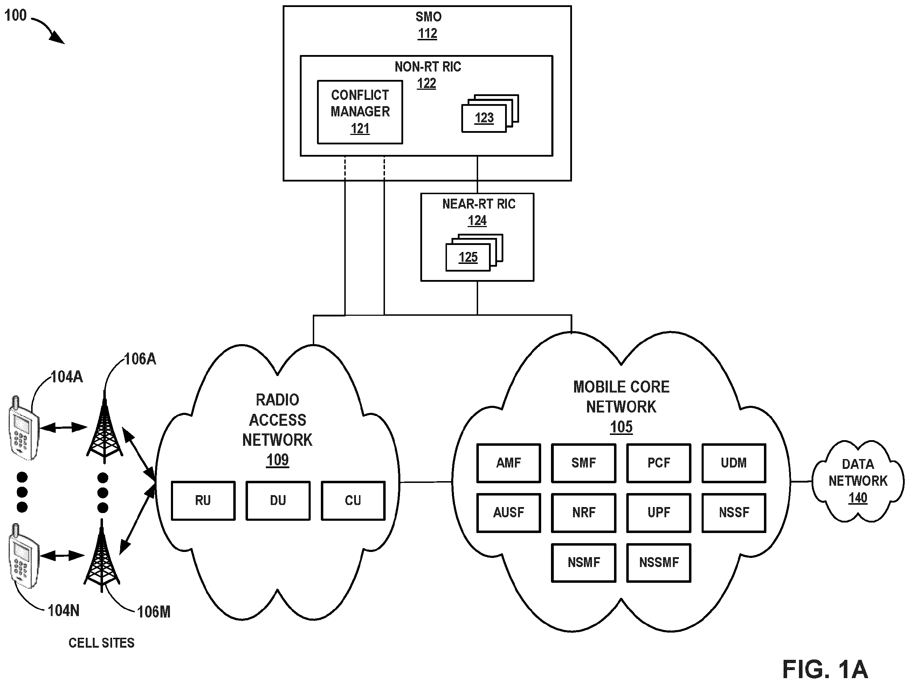

FIG. 1A is a block diagram illustrating an example network system configured to provide conflict management of functions and services of a RAN, in accordance with one or more techniques of the disclosure. In the example illustrated in FIG. 1A, network system 100 includes Service and Management Orchestrator (SMO) 112, non-RT RIC 122, near-RT RIC 124, one or more radio access networks (RANs), e.g., RAN 109, and mobile core network (or simply "core") 105 that provide user equipment 104A-104N (collectively, "UEs 104") with access to one or more applications or services provided by data network 140.

UEs 104 may represent smartphones, desktop computers, laptop computers, tablets, smart watches, and/or "Internet-of-Things" (IOT) devices, such as cameras, sensors, televisions, appliances, or the like. As shown in FIG. 1A, network system 100 includes RAN 109 that provides network access, data transport, and other services to UEs 104. In some examples, RAN 109 may be an Open Radio Access Network (O-RAN), a 5G mobile network RAN, a 4G LTE mobile network RAN, another type of RAN, or a combination of the above. For example, in a 5G-radio access network, RAN 109 comprises a plurality of cell sites (or simply "cells") that each include radio equipment, such as base stations 106A-106M (collectively, "base stations 106"), also known as gNodeBs, to exchange packetized data within a data network to ultimately access one or more applications or services provided by data network 140. Each of base stations 106 is divided into three functional components: radio unit (RU), distributed unit (DU), and central unit (CU), which can be deployed in various configurations. RU manages the radio frequency layer and has antenna arrays of various sizes and shapes. DU performs lower layer protocol processing. CU performs the upper layer protocol processing. Depending on operator and service requirements, base stations 106 can be deployed monolithically, e.g., RU, DU, and CU reside within a cell site, or these functionalities can be distributed across cell sites while the CU resides in an edge cloud site controlling a plurality of distributed DUs. O-RAN is, for example, an approach to networking in which disaggregated functions can be used to deploy mobile fronthaul and midhaul networks. The disaggregated functions can be cloud-based functions.

Radio access networks 109 connect to core 105 to exchange packets with data network 140. Core 105 may be a 5G core network, and data network 140 may represent, for example, one or more service provider networks and services, the Internet, third party services, one or more IP-VPNs, an IP-multimedia subsystem, a combination thereof, or other network or combination of networks. In some examples, resources associated with the service provided by a mobile network operator to the tenant may be provided by, or managed by, functions of core 105 and/or components of RAN 109. In some examples, core 105 implements various discrete control plane and user plane functions for network system 100. Examples of 5G control plane functions that may be provided by core 105 include Access Mobility Management Function (AMF) that provides access mobility management services, Session Management Function (SMF) that provides session management services, Policy Control Function (PCF) that provides policy control services, User Data Management (UDM) that provides management of network user data, Network Repository Function (NRF) that provides a repository that can be used to register and discover services in a network operator's network, Authentication Server Function (AUSF) that provides authentication services, Network Slice Selection Function (NSSF), Network Slice Management Function (NSMF) that may be used to select an instance of an available network slice for use by any of UE devices 104, and Network Slice Subnet Management Function (NSSMF) that provides coordination, management, and orchestration of network slice subnet instances (NSSI). Core 105 may also include User Plane Functions (UPF) that provides packet routing, forwarding and other network data processing functions (e.g., Quality of Service, packet inspection, traffic optimization etc.). Further details on services and functions provided by the 5G core, can be found in 3^{rd} Generation Partnership Project 2021, Technical Specification Group Services and System Aspects; System architecture for the 5G System (5GS); Stage 2 (Release 17), TS 23.501 V17.0.0 (2021-03), which is superseded by 2021, Technical Specification Group Services and System Aspects; System architecture for the 5G System (5GS); Stage 2 (Release 18), TS 23.501 V18.2.2 (2023-07), the entire contents of each of which are hereby incorporated by reference. Further details on the O-RAN architecture can be found in O-RAN Alliance, "O-RAN Architecture Description," version 7.00, October 2022, the entire contents of which is hereby incorporated by reference.

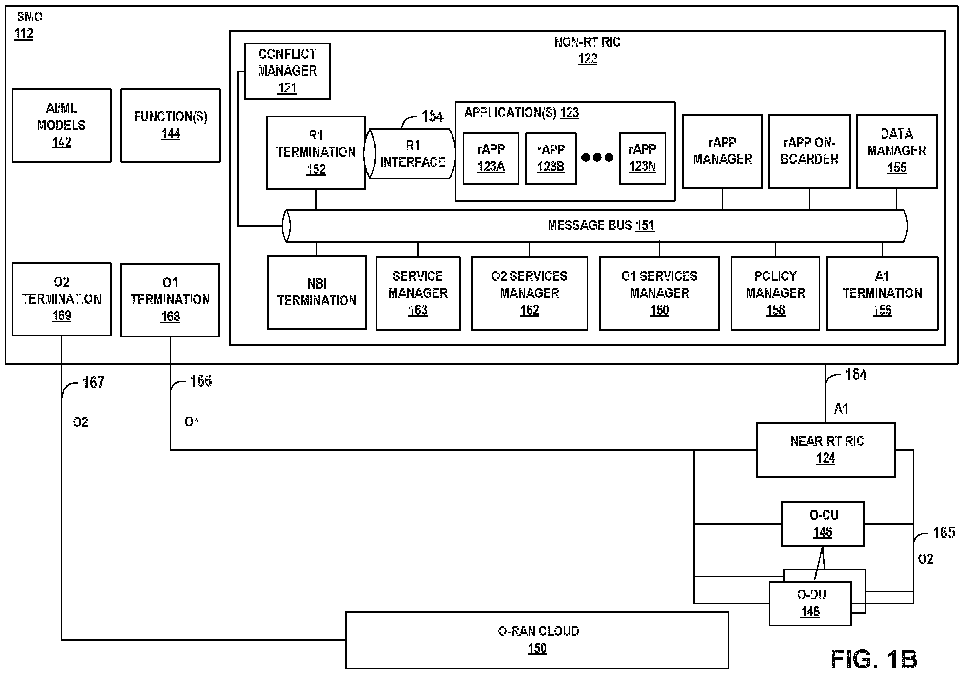

Aspects of RAN 109 and/or core 105 may be managed and/or monitored by SMO 112, non-RT RIC 122, and near-RT RIC 124. In some examples, SMO 112, non-RT RIC 122, and near-RT RIC 124 may be operated by the mobile network operator providing 5G services to a tenant. SMO 112 can orchestrate and control management and automation aspects of RAN 109 (e.g., network slicing, management, and orchestration of O-Cloud, etc.). Further, SMO 112 may control aspects of non-RT RIC 122 and near-RT RIC 124. Non-RT RIC 122 can provide non-real-time (e.g., greater than one second) control and optimization of RAN elements and resources such as RUs, DUs, and CUs, workflow management, and policy-based control of applications and features of near-RT RIC 124. Near-RT RIC 124 can provide near-real-time (e.g., milliseconds) control and optimization of RAN elements and resources via fine-grained data collection and actions. As further described in FIG. 1B, non-RT RIC 122 and near-RT RIC 124 may deploy as a highly scalable, microservices based containerized architecture. In some examples, near-RT RIC 124 may be located within an edge or regional cloud.

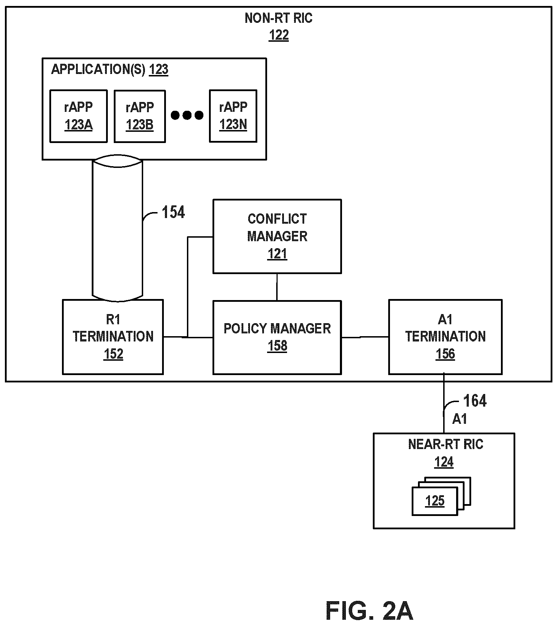

Non-RT RIC 122 may onboard one or more applications, e.g., applications 123 (e.g., rApps of FIG. 1B) that manage non-real time events within non-RT RIC 122, such as applications that do not require response times of less than one second. Applications 123 may leverage the functionality exposed via the non-RT RIC framework of non-RT RIC 122. Applications 123 may be used to control and manage RAN elements and resources, such as near-RT RIC 124, RAN nodes, and/or resources in the O-RAN cloud. Applications 123 may also utilize network data, performance metrics, and subscriber data to provide recommendations for network optimization and operational guidance (e.g., policies) to one or more applications of near-RT RIC 124. Near-RT RIC 124 may onboard one or more applications, e.g., applications 125 (e.g., xApps of FIG. 2A) that manage near-real time events within near-RT RIC 124. Applications 125 may leverage the functionality exposed via the near-RT RIC framework of near-RT RIC 124. Near-RT RIC 124 may enforce policies received from applications 123 of non-RT RIC 122 and may provide policy feedback to non-RT RIC 122. Although illustrated as within non-RT RIC 122, any one or more of applications 123 may be executed by a third party, separate from non-RT RIC 122. Likewise, although illustrated as within near-RT RIC 124, any one or more of applications 125 may be executed by a third party, separate from near-RT RIC 124.

As described further below, non-RT RIC 122 may provide services using A1, O1, and O2 interfaces. An A1 interface connects the non-RT RIC 122 and near-RT RIC 124. Non-RT RIC 122 may perform services via the A1 interface, such as policy management services (e.g., creation and update of a policy), ML model management services, and/or enrichment information services. Services performed via the A1 interface are referred to herein as "A1 services." An O1 interface may include an interface that connects SMO 112 with O-RAN managed elements, such as near-RT RIC 124 and/or RAN nodes (e.g., O-RAN centralized unit (O-CU), O-RAN distributed unit (O-DU)). Non-RT RIC 122 may perform services via the O1 interface, such as configuration management services and performance management services of O-RAN managed elements (e.g., operation and maintenance (OAM) services), fault supervision, file management, heartbeat, trace, physical network function (PNF) discovery, software management, etc.). Services performed via the O1 interface are referred to herein as "O1 services." An O2 interface may include an interface that connects SMO 112 to resources of the ORAN O-Cloud. The O-Cloud may comprise of one or more physical infrastructure nodes that host O-RAN functions (e.g., virtual network functions), the supporting software components, and the appropriate management and orchestration functions. Non-RT RIC 122 may perform services via the O2 interface, such as services that provide infrastructure management and/or network function deployment of the resources in the O-Cloud (e.g., discovery and administration of O-Cloud resources; Scale-In, Scale-Out of cloud/deployments; Fault, Configuration, Accounting, Performance, and Security (FCAPS) of cloud/deployments, software management of cloud platform/deployments; create/delete deployment and associated allocated O-Cloud resources). Services performed via the O2 interface are referred to herein as "O2 services." Non-RT RIC 122 may also perform other functions and services, such as service management and exposure (SME) services (e.g., registration of a service, update of a service registration), data management and exposure (DME) services, AI/ML services, or the like.

In some instances, functions and/or services (e.g., A1 services, O1 services, O2 services, etc.) provided by non-RT RIC 122 may be in conflict. Some conflicts may be observed directly by the framework functions (referred to herein as a "direct conflict"). For example, two or more applications 123 may request different settings for the very same parameters of a target (e.g., a first application requests for a first priority of a network slice, whereas a second application requests for a second, different priority for the same network slice). A target may be a configurable parameter, setting, object, or resource of the RAN, such as a priority, a policy, a network slice or network slice parameter, etc. As another example, an application may perform a change that conflicts with a running configuration from a previous request of the same or another application. As another example, an application may perform a change that exceeds the limitation of the target or RAN.

In some examples, some conflicts may not be observed directly, but dependence among the parameters and resources that the applications are targeting can be observed (referred to herein as an "indirect conflict"). For example, an application may perform a change that creates a system impact which is equivalent to a change performed by another application (e.g., applications performing different actions, but impacts to the system are equivalent). The above are example types of conflicts and are merely some examples of the types of conflicts. Other conflicts may be observable, such as conflicts that are not observed directly of where the dependency between applications is not obvious (referred to as an "implicit conflict").

In accordance with the techniques described in this disclosure, non-RT RIC 122 may provide conflict management for one or more non-RT RIC functions or services (e.g., A1 services, O1 services, O2 services, and other services). In this example, non-RT RIC 122 may include a conflict manager 121 configured to provide conflict management for one or more non-RT RIC functions or services. Conflict manager 121 may be implemented, for example, by one or more microservices.

As further described below, non-RT RIC 122 may include a conflict manager 121 configured to determine whether A1 services have a conflict. For example, conflict manager 121 of non-RT RIC 122 may determine, in response to receiving a request from an application 123 to create a policy to be deployed to near-RT RIC 124 via the A1 interface, whether the creation of the policy would cause a conflict. If conflict manager 121 determines there is no conflict, conflict manager 121 may instruct non-RT RIC 122 (e.g., a policy manager of non-RT RIC 122) to proceed with the creation of the policy of the application 123. If conflict manager 121 determines that there is a conflict (e.g., policy statements would conflict with a previously deployed policy from the application or another application), conflict manager 121 may instruct non-RT RIC 122 to perform an action to address the conflict. Such actions to address the conflict may include, for example, implementing (or not implementing) the policy based on one or more conflict management rules. The conflict management rules may include, for example, implementing a policy based on a first come, first served basis, implementing a policy from the application with a higher priority (referred to herein as "priority-based overriding"), implementing a policy based on scope of the policy (e.g., implementing a policy with a specific scope rather than a policy with a generic scope), etc. In some examples, a user may specify which conflict management rule to apply to address the conflict.

In some examples, an application may request for guidance from the conflict manager 121 before creating a policy. In these examples, conflict manager 121 of non-RT RIC 122 may determine if there is a conflict with the creation of the policy and provide a response (e.g., guidance response) that indicates whether there is a conflict or not, includes one or more recommendations to resolve the conflict, and/or identifies the cause of the conflict (e.g., identification of contradicting statements, etc.).

Conflict manager 121 of non-RT RIC 122 may additionally, or alternatively, be configured to determine whether O1 services have a conflict. For example, conflict manager 121 may determine, in response to a request to provision configuration changes or creation of a performance management (PM) job, whether the configuration and/or performance of the O1 service would cause a conflict (e.g., with the configuration and/or performance of a previous O1 service). If conflict manager 121 determines there is no conflict, conflict manager 121 may instruct non-RT RIC 122 (e.g., an O1 services manager of non-RT RIC 122) to proceed with implementing the O1 service. If conflict manager 121 determines that there is a conflict, conflict manager 121 may instruct non-RT RIC 122 to perform an action to address the conflict, such as to implement (or not implement) the O1 service based on the conflict management rules described above (e.g., first come, first served; priority-based overriding; scope; etc.).

Conflict manager 121 of non-RT RIC 122 may further be configured to determine whether O2 services have a conflict. For example, conflict manager 121 may request to provision configuration changes on one or more resources of the O-RAN cloud. If conflict manager 121 determines there is no conflict, conflict manager 121 may instruct non-RT RIC 122 (e.g., an O2 services manager of non-RT RIC 122) to proceed with implementing the O2 service. If conflict manager 121 determines that there is a conflict, conflict manager 121 may instruct non-RT RIC 122 to perform an action to address the conflict, such as to implement (or not implement) the O2 service based on the conflict management rules described above (e.g., first come, first served; priority-based overriding; scope; etc.).

Although the examples described above are described with respect to A1, O1, and O2 services, conflict manager 121 may provide conflict management to other services, such as services management and exposure (SME) services that enable services provided over an internal interface (R1 interface) of non-RT RIC 122 and their exposure and extensibility (e.g., registration of a service, update to service registration, discoverability of a service), data management and exposure (DME) services that manage the data of applications 123, and/or other services, such as AI/ML services. For example, conflict manager 121 may determine if there is a conflict of SME services when applications 123 perform service registration and/or updates to the service registration (e.g., determine if the service conflicts with previously registered services). If conflict manager 121 determines there is no conflict, conflict manager 121 may instruct non-RT RIC 122 (e.g., a service manager of non-RT RIC 122) to proceed with the registration or update of the SME service. If conflict manager 121 determines that there is a conflict, conflict manager 121 may instruct non-RT RIC 122 to perform an action to address the conflict, such as to permit or deny the registration or update of the service. As another example, conflict manager 121 may determine if there is a conflict when applications 123 perform service discovery or authorization (e.g., determine if the service conflicts with previously discovered or authorized applications). If conflict manager 121 determines there is no conflict, conflict manager 121 may instruct non-RT RIC 122 (e.g., a service manager of non-RT RIC 122) to proceed with allowing the service to be discovered. If conflict manager 121 determines that there is a conflict, conflict manager 121 may instruct non-RT RIC 122 to perform an action to address the conflict, such as to deny the discoverability of the service.

FIG. 1B is a block diagram illustrating further example details of the non-RT RIC 122 of FIG. 1A. In the example illustrated in FIG. 1B, SMO 112 may include non-RT RIC 122, one or more AI/ML models 142, one or more functions 144 (e.g., NSSMF, NFMF, and other functions), and open interfaces, such as O1 termination interface 168 and O2 termination interface 169. SMO 112 may manage non-RT RIC 122, near-RT RIC 124, O-RAN managed elements (e.g., centralized unit (O-CU) 146, O-RAN decentralized unit (O-DU) 148 of one or more base stations), and resources in O-RAN cloud 150.

Near-RT RIC 124 can provide near-real-time (e.g., milliseconds) control and optimization of RAN elements and resources, such as O-CU 146 and/or O-DU 148, via fine-grained data collection and actions performed via E2 interface 165. For example, near-RT RIC 124 may onboard one or more applications (e.g., xApps) that provide near-real time control of RAN elements and their resources.

Non-RT RIC 122 may provide non-real-time (e.g., greater than one second) control and optimization of RAN elements and resources such as RUs, DUs, and CUs, workflow management, and policy-based control of applications and features of near-RT RIC 124

Non-RT RIC 122 may be deployed as a highly scalable, microservices based containerized architecture. In this example, non-RT RIC 122 may onboard, deploy, and/or terminate one or more applications, e.g., rApp 123A through rApp 123N (collectively "applications 123"). Applications 123 may represent applications that leverage the functionality exposed via the framework of non-RT RIC 122. Applications 123 may provide non-RT RIC 122 with non-real time (e.g., greater than one second) control of RAN elements and their resources. Applications 123 may provide services for radio resource management, higher layer procedure optimization, policy optimization, and providing guidance, parameters, policies, and AI/ML models to support the operation of RAN functions.

For example, applications 123 may provide A1 services that provide and facilitate RAN operations and optimization of near-RT RIC 124, such as providing operational guidance (e.g., policies), enrichment information (e.g., forecasts), and AI/ML services. A1 services may include policy management services such as creating, updating, and/or deleting of A1 policies; receiving policy feedback; querying policy types, identifiers, and status; defining which policy types are supported by near-RT RIC 124; and registering applications (xApps) of near-RT RIC 124 to specific policy types. A1 services may include enrichment information services, such as providing data for model training of AI/ML models, such as forecasts and/or data analytics.

Applications 123 may provide O1 services that provide configuration management or performance management of O-RAN managed entities, such as near-RT RIC 124 and/or RAN nodes, e.g., O-CU 146, O-DU 148 (also referred to herein as "E2 nodes"). O1 services may provide configuration management services to create, update, and/or delete configurations to O-RAN managed entities. For example, configuration management services may include provisioning operations (e.g., for NSS and NF provisioning) to create a managed object instance (MOI), obtain MOI attributes, modify MOI attributes, and/or delete the MOI. O1 services may also provide performance management services that monitor the status of elements or components in the O-RAN managed entities. For example, non-RT RIC 122 may create, modify, or delete performance management jobs to receive performance metrics, or send heartbeat messages to monitor the status and/or availability of services of RAN nodes or to send trace messages to monitor link failures. O1 services may also provide file management, such as to push files to the RAN nodes (e.g., software updates, beamforming configuration files, ML models, security certificates, etc.).

Applications 123 may provide O2 services that provide infrastructure management and/or network function deployment of resources in O-RAN cloud 150 (also referred to herein as "O-Cloud 150"). O2 services may provide discovery and administration of O-Cloud resources; Scale-In, Scale-Out of cloud/deployments (e.g., deploying resources with more or less processors); FCAPS of cloud/deployments, software management of cloud platform/deployments; create/delete deployment and associated allocated O-Cloud resources.

Applications 123 may provide service management and exposure (SME) services, data management and exposure (DME) services, and/or other services. SME services may provide services that enable services provided over an internal interface (R1 interface 154) of non-RT RIC 122 and their exposure and extensibility through services including bootstrap, service registration/deregistration or updates to service registration, service discovery or notification, heartbeat, authentication, authorization, etc. Data management and exposure (DME) services may include services that manage data and their exposure between applications 123. For example, applications 123 may have different functions, such as application 123A configured to collect and analyze data, application 123B configured to generate an ML model based on the results of the analysis, and application 123N configured to make a prediction or inference using the ML model and/or to generate controls for RAN nodes based on the prediction or inference. DME services may manage the data shared between applications 123, such as the collection of data, the processing of the data, and/or the advertisement of the data.

Non-RT RIC 122 may include one or more managers to process the A1, O1, O2, SME, DME services, and other services. For example, non-RT RIC 122 may include a policy manager 158, O1 services manager 160, O2 services manager 162, service manager 163, data manager 155, and conflict manager 121. Non-RT RIC 122 may include other managers, such as an application manager and an application on-boarder, that are configured to manage the installation and deployment of applications 123.

Policy manager 158 is configured to control the deployment of policies (e.g., A1 services). For example, in response to receiving requests for A1 services from applications 123 via R1 interface 154, R1 interface 154 sends the requests to policy manager 158 via message bus 151. Policy manager 158 may process the A1 services and may send the A1 services to A1 termination 156 via message bus 151, which provides the A1 services to near-RT RIC 124 via A1 interface 164. In some examples, the A1 interface may implement an A1AP application protocol based on the O-RAN specifications.

O1 services manager 160 is configured to control the deployment of O1 services for monitoring the performance of near-RT RIC 124 and/or RAN nodes (e.g., O-CU 146, O-DU 148). For example, in response to receiving requests for O1 services for monitoring the performance of near-RT RIC 124 from applications 123 via R1 interface 154, R1 interface 154 sends the requests to O1 services manager 160 via message bus 151. O1 services manager 160 may process the O1 services and may send the O1 services to O1 termination 168, which provides the O1 services to near-RT RIC 124 via O1 interface 166. In some examples, the O1 interface may implement REST/HTTPS APIs and/or NETCONF.

O1 services manager 160 is additionally, or alternatively, configured to control the deployment of O1 services for the configuration of near-RT RIC 124 and/or RAN nodes. For example, in response to receiving requests for O1 services for the configuration of near-RT RIC 124 from applications 123 via R1 interface 154, R1 interface 154 sends the requests to O1 services manager 160. O1 services manager 160 may process the O1 services and may send the O1 services to O1 termination 168, which provides the O1 services to near-RT RIC 124 via O1 interface 166.

O2 services manager 162 may be configured to control the deployment of O2 services for monitoring the performance of resources of O-Cloud 150. For example, in response to receiving requests for O2 services for monitoring the performance of resources within O-Cloud 150 via R1 interface 154, R1 interface 154 sends the request to O2 services manager 162. O2 services manager 162 may process the O2 services and may send the O2 services to O2 termination 169, which provides the O2 services to resources of O-Cloud 150 via O2 interface 167.

O2 services manager 162 may additionally, or alternatively, be configured to control the deployment of O2 services for the configuration of resources of O-Cloud 150. For example, in response to receiving requests for O2 services for configuring resources within O-Cloud 150 from applications 123 via R1 interface 154, R1 interface 154 sends the requests to O2 services manager 162. O2 services manager 162 may process the O2 services and may send the O2 services to O2 termination 169, which provides the O2 services to resources of O-Cloud 150 via O2 interface 167.

In some examples, R1 interface 154 also exposes applications 123 to SME services, DME services, and/or other services. For example, in response to receiving requests for SME services from applications 123 via R1 interface 154, R1 interface 154 sends the requests to service manager 163. Service manager 163 may process the SME services (e.g., register/update a service) and may send the SME services to R1 termination 152, which provides the SME services to applications 123 via R1 interface 154 (e.g., sending response to application regarding service registration, update, or discovery). Similarly, in response to receiving requests for DME services from applications 123 via R1 interface 154, R1 interface 154 sends the requests to data manager 155. Data manager 155 may process the DME services and may send the DME services to R1 termination 152, which provides the DME services to applications 123 via R1 interface 154 (e.g., sending data from application configured as a data producer to application configured as a data consumer).

R1 interface 154 may also expose applications 123 to slice subnet management services, such as RAN NSSMF interfaces to retrieve slice service level agreements (SLAs) and slice topologies, and/or slice management, SLA, and slice performance management notifications to applications 123.

In accordance with the techniques described in this disclosure, conflict manager 121 is configured to provide conflict management for services of the corresponding interface(s) of non-RT RIC 122. In some examples, conflict manager 121 may be implemented, for example, by one or more microservices of non-RT RIC 122. While conflict manager 121 is illustrated as a separate microservice of non-RT RIC 122, in some examples, the techniques described herein may be performed by one or more other microservices, such as policy manager 158, O1 services manager 160, O2 services manager 152, service manager 163, and/or data manager 155. In this example, in response to receiving a request of an A1 service, O1 service, O2 service, or other services (e.g., SME, DME), R1 termination 152 may send a message via message bus 151 to conflict manager 121 to perform conflict management of the A1 service, O1 service, O2 service, or other services.

As one example, conflict manager 121 may provide conflict management for A1 services to create, modify, or delete a policy. A policy may be a declarative policy expressed using formal statements that enable non-RT RIC 122 to guide the near-RT RIC 124 function. As one example, a policy may comprise a scope identifier and one or more policy statements. A scope identifier may represent what the policy statements are to be applied on (e.g., cells, network slices, UEs, UE groups, QoS flows, etc.). The one or more policy statements may specify policy goals, such as policy objectives (e.g., QoS, QoE, UE level, slice SLA objectives) and policy resources (e.g., resource usage for the policy). Additional examples of policy management services are described in O-RAN.WG2.A1GAP-v03.000; "O-RAN Working Group 2; A1 interface: General Aspects and Principles," the entire contents of which is incorporated by reference herein. An example of a policy created by a first application (e.g., rApp 123A) is shown below:

```
        Example A1 policy:
        {
            "scope": {
                 "sliceId": {
                     "sst": 3, "sd": "456DEF",
                     "pimnid": { "mcc":"248", "mnc":"35" }
             }
         },
            "sliceSlaObjectives": {
                 "maxNumberOfUes": 10000,
                 "maxNumberOfPduSessions": 800 },
            "sliceSlaResources": {
                 "cellIdList": [
                     {"pimnid": {"mcc": "248","mnc": "35"}, "eld": {"ncl":
        1}},
                     {"pimnid": {"mcc": "248","mnc": "35"}, "cId": {"ncl":
        2}}
                  ]
        }
    }
```

The scope of the above policy includes a slice with slice SLA objectives specifying the maximum number of UEs (e.g., 10000) and maximum number of PDU sessions (e.g., 800), and slice SLA resources specifying target cells in near-RT RIC domain includes certain types of cells.

In some instances, a second application (e.g., rApp 123B) may request to create a policy that conflicts with the policy of the first application. For example, an example of a policy of the second application (e.g., rApp 123B) is shown below:

```
        Example A1 policy:
        {
            "scope": {
                 "sliceId": {
                     "sst": 3, "sd": "456DEF",
                     "pimnid": { "mcc":"248", "mnc":"35" }
             }
        },
            "sliceSlaObjectives": {
                 "maxNumberOfUes": 30000,
                 "maxNumberOfPduSessions": 800 },
            "sliceSlaResources": {
                 "cellIdList": [
                     {"pimnid": {"mcc": "248","mnc": "35"}, "cId": {"ncl":
        1}},
                     {"pimnid": {"mcc": "248","mnc": "35"}, "cId": {"ncl":
        2}}
                  ]
        }
     }
```

Conflict manager 121 may determine whether there are conflicts between the overlapping policies of applications 123 (rApps), for example, by determining whether the overlapping policies include contradicting statements (e.g., objective/resource statements). In this example, conflict manager 121 may determine that there is a conflict between the objective statements (e.g., policy of the first application (rApp 123A) that specifies a maximum number of UEs as 10000 and the policy of the second application (e.g., rApp 123B) that specifies a maximum number of UEs as 30000).

Based on the determination that there is a conflict between the objective statements of the policy of application 123A and the objective statements of the policy of application 123B, conflict manager 121 may instruct non-RT RIC 122 to perform an action to address the conflict. In some examples, conflict manager 121 may determine which of the conflicting policies to implement based on one or more conflict management rules. As one example, conflict manager 121 may implement a first come, first served rule. In this example, non-RT RIC 122 may implement the policy of the first application if the request to create the policy of the first application precedes the request to create the policy of the second application. Alternatively, or additionally, conflict manager 121 may implement a priority-based overriding rule where the policy of an application with a higher priority is implemented. For example, conflict manager 121 may implement the policy of the second application based on the second application having a higher priority than the first application. In some examples, conflict manager 121 may override a policy with a general scope with a policy specifying a narrower scope. For example, non-RT RIC 122 may implement a policy for a UE specific performance target over a policy specifying performance target for all UEs. In some examples, an operator may configure the conflict management rule to apply for each policy statement. For example, the operator may configure the implementation of a first conflict management rule in response to the determination of a conflict with a first policy statement and configure the implementation of a second conflict management rule that is different than the first conflict management rule in response to the determination of a conflict with a second policy statement. In some examples, parameters of a network resource may be classified into different types, such as an Information Object Class (IOC), ProxyClass, and DataType parameters. An IOC describes the information that can be used in management interfaces. The IOC includes attributes that represent the various properties of the IOC. Managed object instances (MOIs) may be the instantiated objects of IOCs when performing configuration management. In some examples, a distinguished name (DN) is used to uniquely identify an MOI within a name space. In these examples, non-RT RIC 122 may apply a conflict management rule based on parameter or based on parameter and parameter type. For example, conflict manager 121 may determine whether a target distinguished name (DN) of a first request overlaps with a target DN of a second request and determine whether an MOI and attribute of the first request overlaps with an MOI and attribute of the second request.

In some examples, non-RT RIC 122 may provide operator-configurable conflict management rules (e.g., user can specify the type of conflict management rule to apply).

In some examples, an application (e.g., rApp A) may request for policy guidance before requesting to create the policy. In these examples, conflict manager 121 may, in response to receiving a request for conflict guidance for a policy, check the target near-RT RIC 124 and/or check for contradicting statements of overlapping policies, validating limits (e.g., whether limits are exceeded or not), and/or conflicting indirect actions. Conflict manager 121 may provide a response (guidance response) including an indication of whether the policy creates a conflict or not. In some examples, conflict manager 121 may provide a response including one or more recommendations to resolve the conflict (e.g., recommendation to resolve the contradicting statements). Alternatively, or additionally, conflict manager 121 may provide a response including information on the cause of the conflict, such as a list of contradicting statements (e.g., contradicting objective/resource parameters).

As another example, conflict manager 121 may provide conflict management for O1 services to create configuration requests for managed object instances (MOI) of O-RAN managed elements (e.g., near-RT RIC 124, O-CU 146, O-DU 148). In this example, a first application (e.g., rApp 123A) may have previously issued a configuration request to create an MOI of O-DU 148. Conflict manager 121 may determine whether a configuration request of a second application (e.g., rApps 123B) to create an MOI of O-DU 148 conflicts with the previous configuration request of the first application to create the MOI of O-DU 148. Based on the determination of whether there is a conflict between the configuration request of the first application and the configuration request of the second application, conflict manager 121 may instruct non-RT RIC 122 to perform an action to address the conflict. Conflict manager 121 may determine which of the conflicting configuration requests to implement based on one or more conflict management rules (e.g., first come, first served; priority-based overriding; scope; etc.), as described above.

As another example, conflict manager 121 may provide conflict management for O2 services to deploy (e.g., provision configuration changes to resources of O-Cloud 150. For example, a first application (e.g., rApp 123A) may have previously issued a configuration request to scale up the number of processors of a resource of O-Cloud 150. Conflict manager 121 may determine whether a configuration request by a second application (e.g., rApp 123B) to provision a configuration change to the resource conflicts with the previous configuration of the resource as requested by the first application. As one example, if the second application request to configure the resource of O-Cloud 150 to reduce the number of processors to save energy, conflict manager 121 may determine that there is a conflict if the configuration request of the first application configures the resource to increase the number of processors for scalability. Based on the determination that there is a conflict between the configuration requests of the resource of O-Cloud 150, conflict manager 121 may instruct non-RT RIC 122 to perform an action to address the conflict. Conflict manager 121 may determine which of the conflicting configuration requests to implement based on one or more conflict management rules (e.g., first come, first served; priority-based overriding; scope; etc.), as described above.

FIG. 2A is a block diagram illustrating an example non-RT RIC 122 providing conflict management of A1 services, in accordance with one or more techniques of this disclosure. In this example, conflict manager 121 may provide conflict management of A1 services (e.g., policy management requests) provided by applications 123 (rApps). Although the techniques for providing conflict management of A1 services are described with respect to conflict manager 121 of FIG. 2A, the techniques for providing conflict management of A1 services may alternatively, or additionally, be performed by policy manager 158 of FIG. 1B or any other microservice of non-RT RIC 122.

Non-RT RIC 122 may include an A1 interface 164 that provides an interface between non-RT RIC 122 and near-RT RIC 124. A1 interface 164 may support A1 services, such as policy management services, enrichment information services, and/or AI/ML services.
In this example, R1 termination 152 may receive, via R1 interface 154, a request of an A1 service from rApp 123A, such as a request to create a policy for near-RT RIC 124. The request may include a policy type identifier, a policy, and a scope identifier (e.g., identifier of near-RT RIC 124). In response, R1 termination 152 sends a message to conflict manager 121 (e.g., via a message bus) to determine whether the A1 service has a conflict. For example, conflict manager 121 may examine the formal statements within overlapping policies for contradicting statements. Conflict manager 121 may determine whether there is a direct conflict between policies of one or more applications 123. For example, conflict manager 121 may determine whether each request specifies different settings for the very same parameters of a target (e.g., two policies include contradicting statements, such as setting different priorities for a slice within a cell, different QoS priority for a QoS of a UE, contradicting technical specification (TS) guidance for a UE or slice, etc.), or whether the policies of applications 123 perform a change that exceeds the limitation of the target or RAN (e.g., an application 123 setting unrealistic downlink throughput target for a UE). In some examples, conflict manager 121 may determine whether there is an indirect conflict, such as whether one application sets a performance target for all UEs of a slice and another application sets UE specific performance target, or whether an application load balances per-cell per-slice to carry load to another cell while another application does technical specification for that slice that forbids the target cell as a primary/secondary cell.

If conflict manager 121 determines there is no conflict, conflict manager 121 may instruct policy manager 158 of non-RT RIC 122 to proceed with the creation of the policy for the application 123. For example, conflict manager 121 may instruct policy manager 158 to process the request to create the policy. Policy manager 158 may generate a command (e.g., HTTP PUT statement) to create the policy and sends the command to A1 termination 156, which in turn sends the command to near-RT RIC 124 via A1 interface 164. In response to the creation of the policy on near-RT RIC 124, near-RT RIC 124 may create and send a response to A1 termination 156 that indicates the policy has been created, which in turn communicates the response to R1 termination 152 to send the response to rApp 123A.

If conflict manager 121 determines that there is a conflict, conflict manager 121 may instruct non-RT RIC 122 to perform an action to address the conflict, such as to implement (or not implement) the A1 service based on the rules described above (e.g., first come, first served; priority-based overriding; scope; etc.).

In some examples, an application (e.g., rApp 123A) may request for guidance before the creation of a policy. For example, R1 termination 152 may receive, via R1 interface 154, a request for guidance on the creation of a policy (e.g., HTTP PUT method) for near-RT RIC 124. R1 interface 154 sends the guidance request to conflict manager 121, which determines whether a conflict would occur if the policy were created. Based on the determination of whether there is a conflict, conflict manager 121 may generate a response to the guidance request that specifies whether the creation of the policy would create a conflict or not. In some examples, conflict manager 121 may provide one or more recommendations to resolve the conflict (e.g., recommendation to resolve contradicting statements of overlapping policies). Alternatively, or additionally, conflict manager 121 may provide information on the cause of the conflict, such as a list of contradicting statements (e.g., contradicting objective/resource parameters). Conflict manager 121 may send the response to the guidance request to R1 termination 152, which in turn sends the response to rApp 123A.

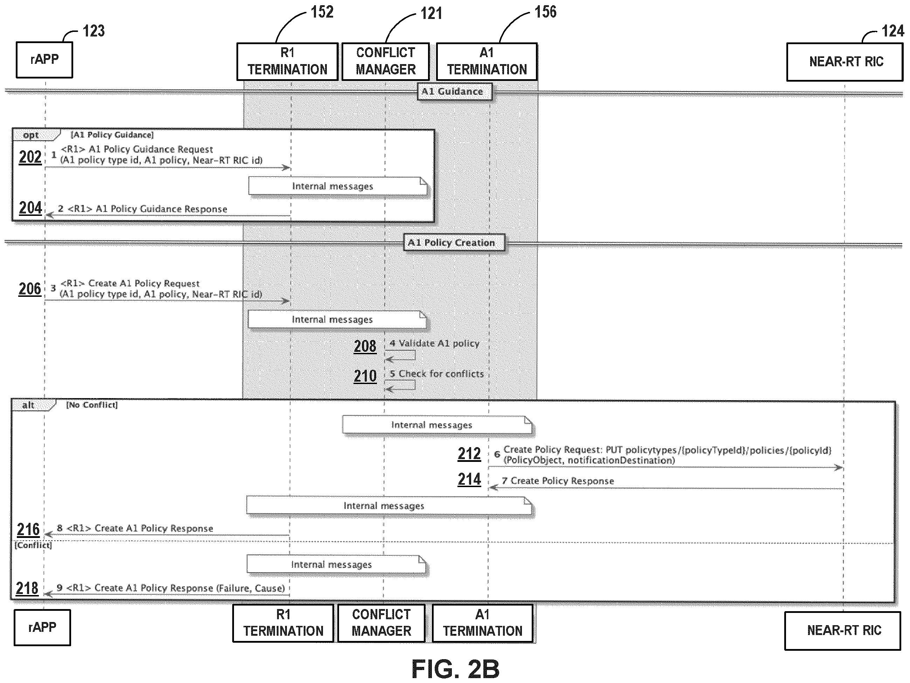

FIG. 2B is a flow diagram of an example conflict management of an A1 service, in accordance with one or more techniques of the disclosure. FIG. 2B is described with respect to conflict manager 121 of FIG. 2A but may also apply to policy manager 158 of FIG. 1B or any other microservices of non-RT RIC 122. Although the example described in FIG. 2B is described with respect to a request to create a policy, the techniques may similarly apply to the modification or deletion of a policy.

In the example of FIG. 2B, steps (202) and (204) may represent the steps for providing policy guidance. For example, an application 123 may send a policy guidance request ("A1 Policy Guidance Request") to R1 termination 152 (202), which sends a message to conflict manager 121 to provide guidance on whether the creation of the policy would have a conflict. The policy guidance request may include an identifier (A1 policy type ID), a policy (A1 policy), and an identifier of a target for the policy (Near-RT RIC id). In response to determining whether there is a conflict, conflict manager 121 sends a response (A1 Policy Guidance Response) to the application that sent the guidance request (204). As described above, the response to the guidance request may include an indication of whether the policy creates a conflict or not, one or more recommendations to resolve the conflict, information on the cause of the conflict, such as a list of contradicting statements, or any other information.

Steps (206) through (218) may represent the steps for providing conflict management, as described in this disclosure. For example, an application 123 may send a request to create a policy (Create A1 Policy Request) to R1 termination 152 (206). The request may include an identifier (A1 policy type ID), a policy (A1 policy), and an identifier of near-RT RIC 124 (Near-RT RIC id). R1 termination 152 sends a message to conflict manager 121 to determine whether there is a conflict or not with the specified policy. Conflict manager 121 may validate the policy (208) and determine whether there are any conflicts (210). For example, conflict manager 121 may examine the formal statements within the overlapping A1 policies for contradicting statements.

In response to determining that there is no conflict, conflict manager 121 may instruct policy manager 158 to create the policy request for near-RT RIC 124 (212). For example, policy manager 158 may execute an HTTP PUT request to create the policy on near-RT RIC 124. In response to the creation of the policy on near-RT RIC 124, near-RT RIC 124 may create and send a response to A1 termination 156 that indicates the policy has been created (214), which in turn communicates the response to R1 termination to send the response to the application (216).

In response to determining that there is a conflict, conflict manager 121 may create a response (Create A1 Policy Response) that indicates there is a conflict (218). In some examples, conflict manager 121 may implement one or more conflict management rules in response to determining that there is a conflict, such as first come, first served; priority-based overriding; scope of the policy; etc.

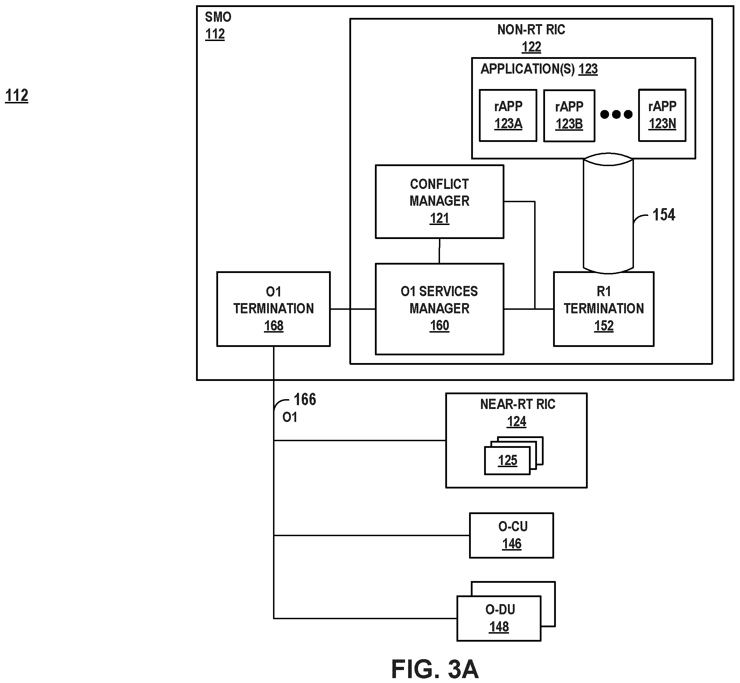

FIG. 3A is a block diagram illustrating an example non-RT RIC 122 providing conflict management of O1 services, in accordance with one or more techniques of this disclosure. In this example, conflict manager 121 may provide conflict management of O1 services (e.g., configuration management or performance management requests) provided by applications 123 (rApps). Although the techniques for providing conflict management of O1 services are described with respect to conflict manager 121 of FIG. 1B, the techniques for providing conflict management of O1 services may alternatively, or additionally, be performed by O1 services manager 160 and/or O2 services manager 162 of FIG. 1B or any other microservice of non-RT RIC 122.

Non-RT RIC 122 may include an O1 interface 166 that provides an interface between SMO 112 and the infrastructure management framework supporting O-RAN virtual network functions (e.g., xApps of near-RT RIC 124 and E2 nodes). O1 interface 166 may support O1 services, such as configuration management services and/or performance management services. In this example, R1 termination 152 may receive, via R1 interface 154, a request of an O1 service from rApp 123A, such as a configuration request to create an MOI for an O-RAN managed element (e.g., O-DU 148 of a base station). In response, R1 termination 152 sends a message to conflict manager 121 to determine whether there are conflicts with the configuration modifications requested by the one or more applications 123. For example, an application may request to modify configuration of a base station, such as a cell identifier. In this example, conflict manager 121 may determine whether the configuration request to modify the cell identifier for the base station would cause a conflict.

If conflict manager 121 determines there is no conflict, conflict manager 121 may instruct O1 services manager 1 to proceed with implementing the O1 service. For example, conflict manager 121 may instruct O1 services manager 160 to process the request to create the configuration. O1 services manager 160 may generate a command (e.g., createMOI request) to create the configuration and sends the command to O1 termination 168, which in turn sends the command to O-DU 148 via O1 interface 166.

If conflict manager 121 determines that there is a conflict, conflict manager 121 may instruct non-RT RIC 122 to perform an action to address the conflict, such as to implement (or not implement) the O1 service based on the conflict management rules described above (e.g., first come, first served; priority-based overriding; scope; etc.).

As another example, R1 termination 152 may receive a request to create a performance job (e.g., performance assurance) for O-DU 148. In response, R1 interface 154 sends a message to conflict manager 121 to determine whether there are conflicts with the creation of the performance job requested by the one or more applications 123. For example, an application may request the creation of a performance job that has overlapping IOCs and attributes, contradicts attribute value changes, etc. In this example, conflict manager 121 may determine whether the request to create the performance job would cause a conflict.

If conflict manager 121 determines there is no conflict, conflict manager 121 may instruct O1 services manager 160 to proceed with implementing the O1 service. For example, conflict manager 121 may instruct O1 services manager 160 to process the request to create the performance job. O1 services manager 160 may generate a command to create the performance job and sends the command to O1 termination 168, which in turn sends the command to O-DU 148 via O1 interface 166.

If conflict manager 121 determines that there is a conflict, conflict manager 121 may instruct non-RT RIC 122 to perform an action to address the conflict, such as to implement (or not implement) the O1 service based on the conflict management rules described above (e.g., first come, first served; priority-based overriding; scope; etc.).

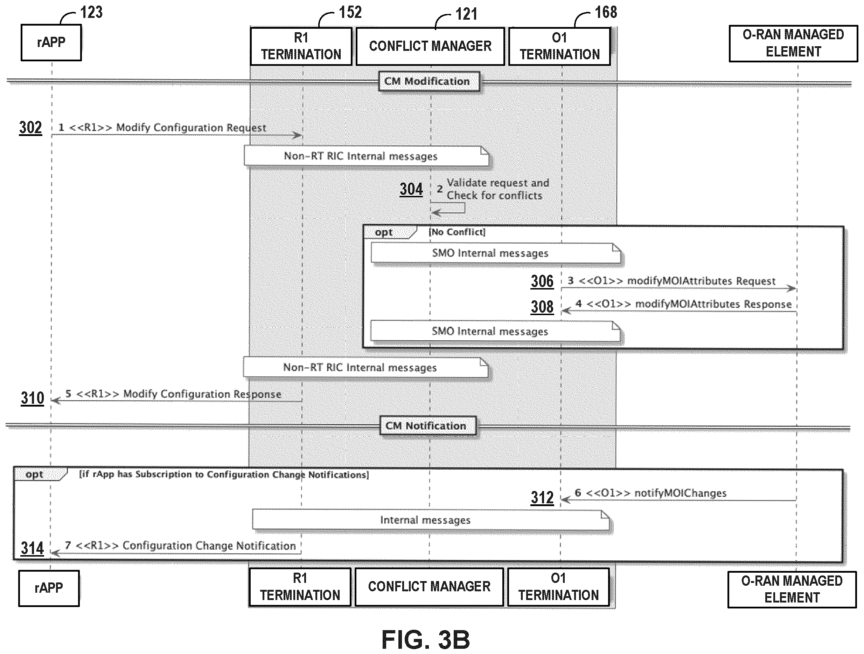

FIG. 3B is a flow diagram of an example conflict management of an O1 service, in accordance with one or more techniques of the disclosure. FIG. 3B is described with respect to conflict manager 121 of FIG. 3A but may also apply to O1 services manager 160 of FIG. 1B. Although the example described in FIG. 3B is described with respect to a request to modify a configuration request, the techniques may also apply to the creation or deletion of a configuration request and/or the creation, modification, or deletion of a performance job.

In the example of FIG. 3B, application 123 may send a request for an O1 service (e.g., to create, modify, or delete a configuration or a performance job) to R1 termination 152 (302), which sends a message to conflict manager 121 to determine whether there is a conflict or not with the specified O1 service. Conflict manager 121 may validate the O1 service and determine whether the O1 service has any conflicts (304).

In response to determining that there is no conflict, conflict manager 121 may instruct O1 services manager 160 to proceed with implementing the O1 service. For example, O1 services manager 160 may process the O1 service for an O-RAN managed element (e.g., near-RT RIC 124, O-CU 146, O-DU 148) by generating a command (e.g., modify MOIAttributes request) to modify the attributes of the O-RAN managed element and sends the command to O1 termination 168, which in turn sends the command to the O-RAN managed element (e.g., O-DU 148) via O1 interface 166 (306). Similarly, O1 services manager 160 may process the O1 service for an O-RAN managed element by generating a command to create the performance job and sends the command to O1 termination 168, which in turn sends the command to the O-RAN managed element via O1 interface 166. In response to performing the O1 service (e.g., modifying MOI attributes, creating performance job, etc.), the O-RAN managed element may create and send a response to O1 termination 168 (308). Conflict manager 121 may generate a response to the request for the O1 service and send the response to R1 termination 152, which in turn sends the response to the application (310).

In some examples, conflict manager 121 may notify the application of changes to the configuration of O-RAN managed elements (if the application is subscribed to configuration change notifications). For example, in response to a change in configuration, the O-RAN managed element may send a notification of configuration changes to O1 termination 168 (312). O2 services manager 162 may generate a notification of the configuration changes and sends the notification to R1 termination 152, which in turn sends the notification to the application that is subscribed to receive notifications of configuration changes to O-RAN managed elements (314).

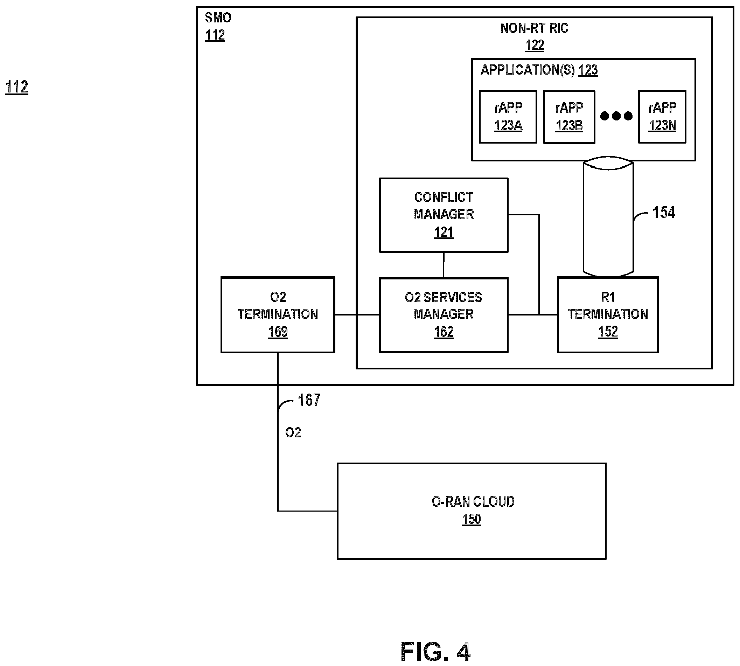

FIG. 4 is a block diagram illustrating an example non-RT RIC 122 providing conflict management of O2 services, in accordance with one or more techniques of this disclosure. In this example, conflict manager 121 may provide conflict management of O2 services provided by applications 123 (rApps). Although the techniques for providing conflict management of O2 services are described with respect to conflict manager 121 of FIG. 1B, the techniques for providing conflict management of O2 services may alternatively, or additionally, be performed by O2 services manager 162 or any other microservice of non-RT RIC 122. The conflict management of O2 services performed by conflict manager 121 may operate substantially similar to the operations of the conflict management of O1 services, as described and illustrated in FIG. 3B.

Non-RT RIC 122 may include an O2 interface 167 that provides an interface between SMO 112 and one or more resources of O-RAN cloud 150. O2 interface 167 may support O2 services, such as infrastructure management services and/or deployment management services for resources of O-Cloud 150, such as one or more physical infrastructure nodes that host O-RAN functions (e.g., virtual network functions), the supporting software components, and the appropriate management and orchestration functions. In this example, R1 termination 152 may receive, via R1 interface 154, a request of an O2 service, such as a request to modify the configuration of a node of O-Cloud 150. The request may specify a modification of the configuration of the node to use additional processors for scalability. In response, R1 interface 154 sends a message to conflict manager 121 to determine whether there are conflicts with the configuration modifications requested by the one or more applications 123. Conflict manager 121 may provide conflict management of O2 services similar to the conflict management of O1 services as described above. In this example, conflict manager 121 may determine whether the configuration request to modify the configuration of the node to use additional processors would cause a conflict (e.g., conflicting a previous request to configure the node to use fewer processors to save energy).

If conflict manager 121 determines there is no conflict, conflict manager 121 may instruct O2 services manager 162 to proceed with implementing the O2 service. For example, conflict manager 121 may instruct O2 services manager 162 to process the request to create the configuration. O2 services manager 162 may generate a command to create the configuration and sends the command to O2 termination 169, which in turn sends the command to the node of O-Cloud 150 via O2 interface 167.

If conflict manager 121 determines that there is a conflict, conflict manager 121 may instruct non-RT RIC 122 to perform an action to address the conflict, such as to implement (or not implement) the O2 service based on the conflict management rules described above (e.g., first come, first served; priority-based overriding; scope; etc.).

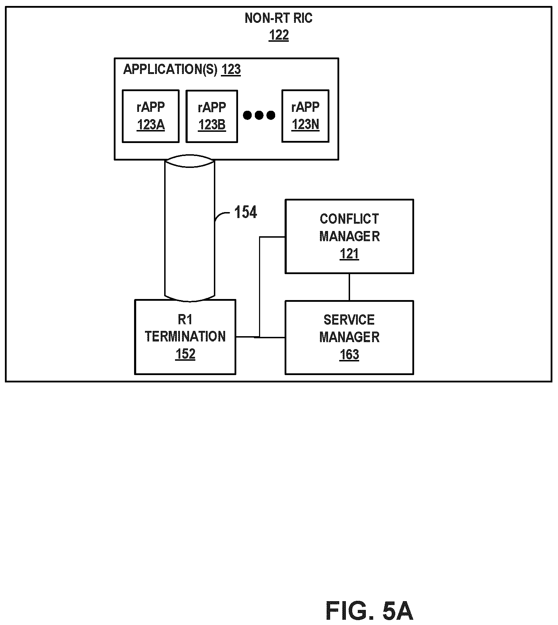

FIG. 5A is a block diagram illustrating an example non-RT RIC 122 providing conflict management of SME services, in accordance with one or more techniques of this disclosure. In this example, conflict manager 121 may provide conflict management of SME services (e.g., service requests) provided by applications 123 (rApps). Although the techniques for providing conflict management of SME services are described with respect to conflict manager 121 of FIG. 1B, the techniques for providing conflict management of SME services may alternatively, or additionally, be performed by service manager 163 or any other microservice of non-RT RIC 122.

Non-RT RIC 122 may include an R1 interface 154 that provides an interface between one or more applications 123 and R1 termination 152. R1 interface 154 exposes applications 123 to SME services. SME services may provide services that enable R1 services and their exposure and extensibility through services including bootstrap, service registration/deregistration or updates to service registration, service discovery or notification, heartbeat, authentication, authorization, etc. In this example, R1 termination 152 may receive, via R1 interface 154, a request of an SME service from rApp 123A, such as a request to register a service via R1 interface 154. The request may specify an identifier of rApp 123A, a service profile, or other information for registering a service. In response, R1 interface 154 sends a message to conflict manager 121 to determine whether there are conflicts with the request to register the service.

Conflict manager 121 may determine whether the request to register the service would cause a conflict (e.g., conflicting a previously registered request). If conflict manager 121 determines there is no conflict, conflict manager 121 may instruct service manager 163 to proceed with registering the service. Service manager 163 may register the service and sends a response to the service registration to R1 termination 152, which in turn sends the response to rApp 123A via R1 interface 154.

If conflict manager 121 determines that there is a conflict, conflict manager 121 may instruct non-RT RIC 122 to perform an action to address the conflict, such as to implement (or not implement) the SME service based on the conflict management rules described above (e.g., first come, first served; priority-based overriding; scope; etc.).

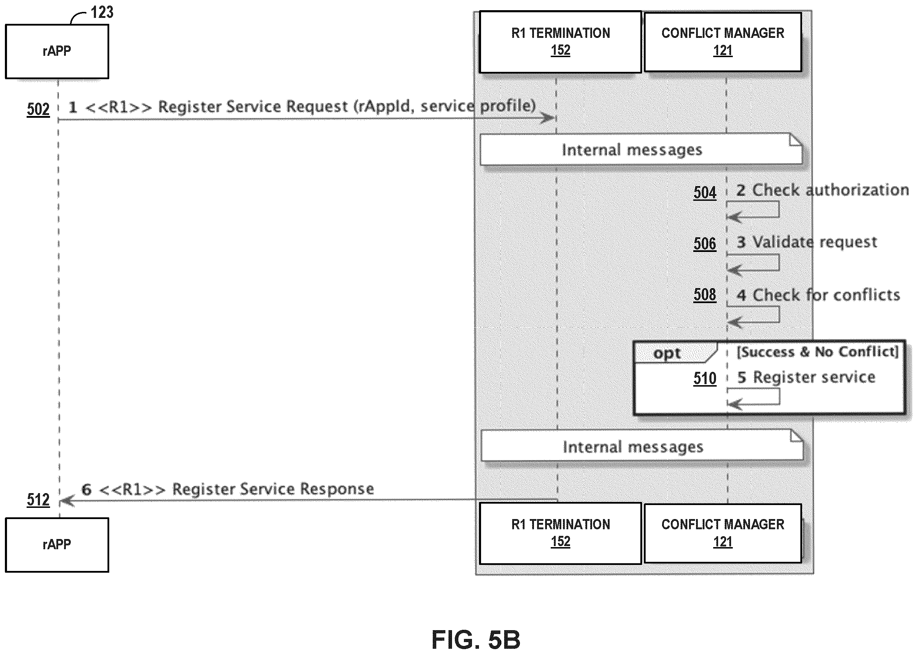

FIG. 5B is a flow diagram of an example conflict management of an SME service, in accordance with one or more techniques of the disclosure. FIG. 5B is described with respect to conflict manager 121 of FIG. 5A but may also apply to service manager 163 or any other microservice of non-RT RIC 122. Although the example described in FIG. 5B is described with respect to registering a service, the techniques may also apply to the modification or deletion of a service.

In the example of FIG. 5B, application 123 may send a request for an SME service (e.g., to register a service request) to R1 termination 152 (502), which sends a message to conflict manager 121 to determine whether there is a conflict or not with the specified SME service. Conflict manager 121 may check the authorization of the service request (504), validate the service request (506), and determine whether the service request has any conflicts (508).

In response to determining that there is no conflict, conflict manager 121 may instruct service manager 163 to proceed with implementing the SME service. For example, service manager 163 may process the SME service by registering the service (510). Service manager 163 sends a response to the service registration to R1 termination 152, which in turn sends the response to application 123 via R1 interface 152 (512).

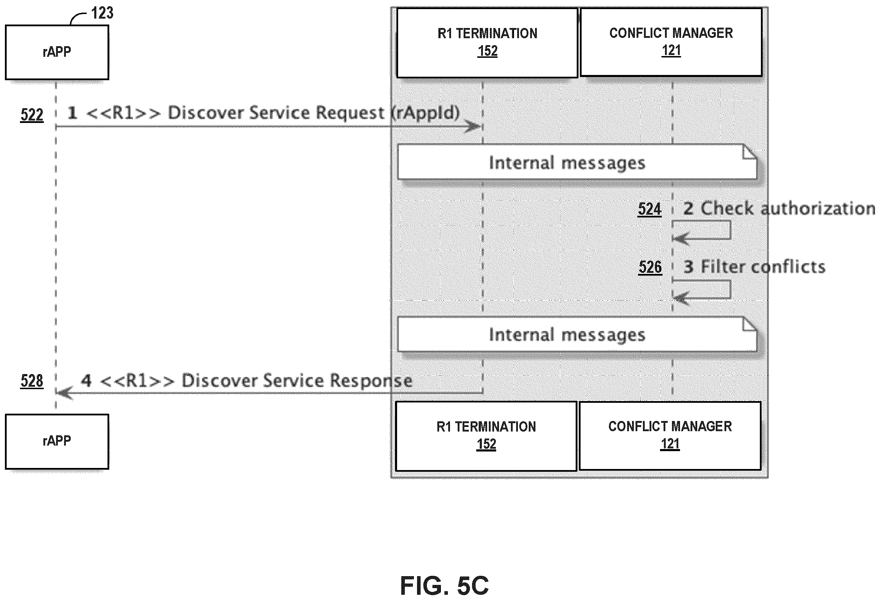

FIG. 5C is a flow diagram illustrating another example conflict management of an SME service, in accordance with one or more techniques of the disclosure. FIG. 5C is described with respect to conflict manager 121 of FIG. 5A but may also apply to service manager 163 or any other microservice of non-RT RIC 122.

In the example of FIG. 5C, application 123 may send a request for an SME service (e.g., to discover a service request) to R1 termination 152 (522), which sends a message to conflict manager 121 to determine whether there is a conflict or not with the specified SME service. Conflict manager 121 may check the authorization of the service discovery request (524) and determine whether the service discovery request has any conflicts (526).

In response to determining that there is no conflict, conflict manager 121 may instruct service manager 163 to proceed with implementing the SME service. For example, service manager 163 may process the SME service by allowing (or not allowing) the service to be discovered. Service manager 163 sends a response to the service discovery request to R1 termination 152, which in turn sends the response to application 123 via R1 interface 152 (528).

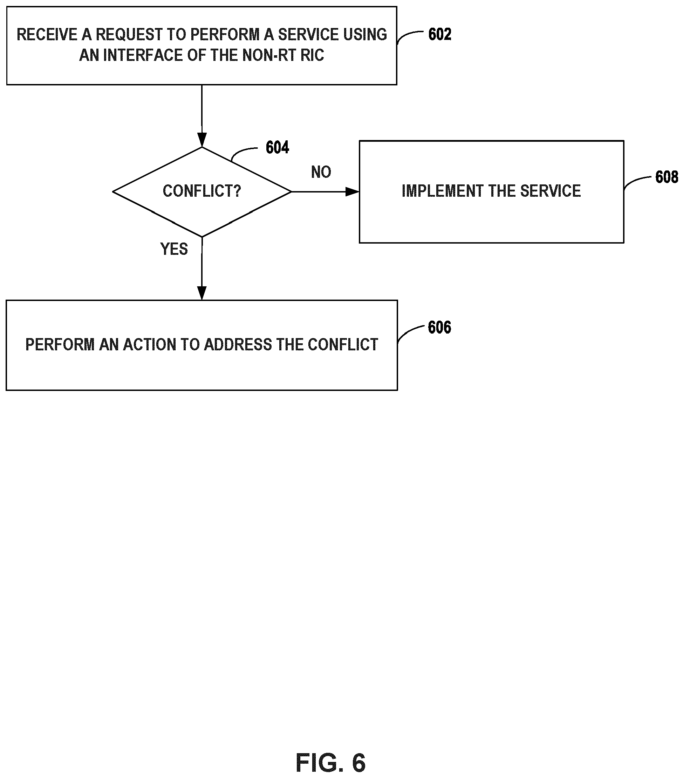

FIG. 6 is a flow diagram of an example operation of a radio access network intelligent controller (RIC) configured to perform conflict management, in accordance with the techniques described in this disclosure. The example operation 600 is described with respect to non-RT RIC 122 of FIG. 1B.

In the example of FIG. 6, non-RT RIC 122 may receive, from an application, a request to perform a service using an interface of non-RT RIC 122 (602). For example, non-RT RIC 122 may receive requests from applications 123 (e.g., requests for A1 services, O1 services, etc.) via R1 interface 154 and sends a message to conflict manager 121 to determine whether the service has a conflict.

Non-RT RIC 122 may determine whether the service has a conflict (604). For example, non-RT RIC 122 may include one or more microservices (e.g., conflict manager 121) configured to provide conflict management for services of corresponding interface(s) (e.g., A1, O1, O2 interfaces) and services available on those interface(s). In some examples, conflict manager 121 is configured to determine whether A1 services (e.g., policies) for near-RT RIC 124 from applications 123 (rApps) have conflicts. For example, conflict manager 121 may determine whether there are conflicts between the policies of applications 123 (rApps), for example, by determining whether overlapping policies include contradicting statements (e.g., objective/resource statements). In some examples, conflict manager 121 is configured to determine whether O1 services (e.g., configuration management services, performance management services) for O-RAN managed elements from applications 123 (rApps) have conflicts. For example, conflict manager 121 may determine whether a request to provision a configuration of an O-RAN managed element (e.g., request to create or update managed object instances (MOI)) would conflict with a previous configuration of the O-RAN managed element. In some examples, conflict manager 121 is configured to determine whether O2 services (e.g., infrastructure management services, deployment management services) for resources of O-RAN cloud from applications 123 (rApps) have conflicts. For example, conflict manager 121 may determine whether a request to provision a configuration of a resource of the O-RAN cloud would conflict with a previous configuration of the resource of the O-RAN cloud. In some examples, conflict manager 121 is configured to determine whether other services have conflict, such as SME services, DME services, AI/ML services, or other services provided by non-RT RIC 122.

In response to determining that the service has a conflict ("YES" of step 604), non-RT RIC 122 may perform an action to address the conflict (606). In some examples, conflict manager 121 may determine which of the conflicting policies to implement based on one or more conflict management rules. As one example, conflict manager 121 may implement a first come, first served rule. In this example, non-RT RIC 122 may implement the policy of a first application if the request to create the policy of the first application precedes the request to create the policy of the second application. Alternatively, or additionally, conflict manager 121 may implement a priority-based overriding rule where the policy of an application with a higher priority is implemented. For example, conflict manager 121 may implement the policy of the second application based on the second application having a higher priority than the first application. In some examples, conflict manager 121 may override a policy specifying a general scope with a policy specifying a narrower scope. For example, non-RT RIC 122 may implement a policy for a UE specific performance target over a more general policy specifying a performance target for all UEs, or override the more general policy broadly-applied in the case of the specific UE for the more narrow policy. In some examples, an operator may configure the conflict management rule to apply for each policy statement. For example, the operator may configure the implementation of a first conflict management rule in response to the determination of a conflict with a first policy statement and configure the implementation of a second conflict management rule that is different than the first conflict management rule in response to the determination of a conflict with a second policy statement. In some examples, parameters of a network resource may be classified into different types, such as an Information Object Class (IOC), ProxyClass, and DataType parameters. An IOC describes the information that can be used in management interfaces. The IOC includes attributes that represent the various properties of the IOC. In these examples, non-RT RIC 122 may apply a conflict management rule based on parameter or based on parameter and parameter type. For example, conflict manager 121 may determine whether a target distinguished name (DN) of a first request overlaps with a target DN of a second request and determine whether a Managed Object Instance (MOI) and attribute of the MOI of the first request overlaps with an MOI and attribute of the MOI of the second request.

If conflict manager 121 determines there is no conflict ("NO" of step 604), conflict manager 121, non-RT RIC 122 may implement the service (608). In some examples, if conflict manager 122 determines that an A1 service (e.g., creation of a policy for near-RT RIC 124) does not have a conflict, conflict manager 121 instructs policy manager 158 of non-RT RIC 122 to proceed with the creation of the policy for near-RT RIC 124 (e.g., generate an HTTP PUT statement to create the policy and send the command to A1 termination 156, which in turn sends the command to near-RT RIC 124 via A1 interface 164). In some examples, if conflict manager 121 determines that an O1 service (e.g., provisioning a configuration for an O-RAN managed element) does not have a conflict, conflict manager 121 instructs O1 services manager 160 to proceed with the provisioning of the configuration for the O-RAN managed element (e.g., generate a command to modify MOI attributes of the O-RAN managed element and send the command to O1 termination 168, which in turn sends the command to the O-RAN managed element via O1 interface 166). In some examples, if conflict manager 121 determines that an O2 service (e.g., provisioning a configuration for a resource of the O-RAN cloud) does not have a conflict, conflict manager 121 instructs O2 services manager 162 to proceed with the provisioning of the configuration for the resource of the O-RAN cloud (e.g., generate a command to modify configuration of physical infrastructure nodes that host O-RAN functions (e.g., virtual network functions), the supporting software components, and the appropriate management and orchestration functions, and send the command to O2 termination 169, which in turn sends the command to the resource of the O-RAN cloud via O2 interface 167).

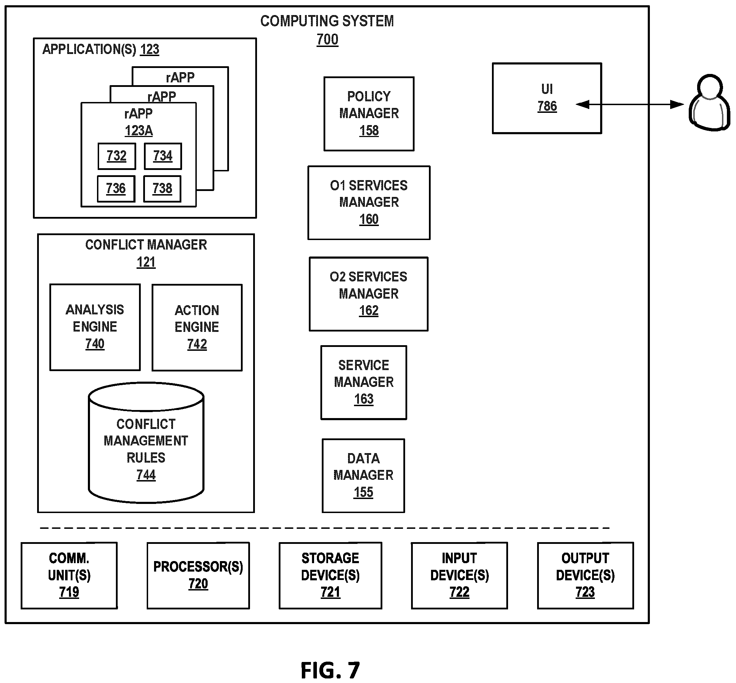

FIG. 7 is a diagram illustrating an example computing system in detail, in accordance with techniques of this disclosure. In this example of FIG. 7, computing system 700 may implement, for example, a non-real time RIC, such as non-RT RIC 122 of FIGS. 1A, 1B, 2A, 3A, 4, and 5A.

Computing system 700 includes one or more processors 720, one or more input devices 722, one or more output devices 723, one or more communication units 719, and one or more storage devices 721. In some examples, computing system 700 is a cloud computing system, server farm, and/or server cluster (or portion thereof) that provides services to client devices and other devices or systems. In other examples, computing system 700 may be implemented through one or more virtualized compute instances (e.g., virtual machines, containers) of a data center, cloud computing system, server farm, and/or server cluster.

One or more of the devices, modules, storage areas, or other components of computing system 700 may be interconnected to enable inter-component communications (physically, communicatively, and/or operatively). In some examples, such connectivity may be provided by communication channels, a system bus (e.g., message bus 151 of FIG. 1B), a network connection, an inter-process communication data structure, or any other method for communicating data.

One or more processors 720 of computing system 700 may implement functionality and/or execute instructions associated with conflict management of a non-RT RIC or associated with one or more modules illustrated herein and/or described herein, including applications 123, policy manager 158, O1 services manager 160, O2 services manager 162, service manager 163, data manager 155, and conflict manager 121. One or more processors 720 may be, may be part of, and/or may include processing circuitry that performs operations in accordance with one or more aspects of the present disclosure. Examples of processors 720 include microprocessors, application processors, display controllers, auxiliary processors, one or more sensor hubs, and any other hardware configured to function as a processor, a processing unit, or a processing device. Computing system 700 may use one or more processors 720 to perform operations in accordance with one or more aspects of the present disclosure using software, hardware, firmware, or a mixture of hardware, software, and firmware residing in and/or executing at computing system 700. Any one or more of applications 123, policy manager 158, O1 services manager 160, O2 services manager 162, service manager 163, data manager 155, and conflict manager 121 may be hosted by a cloud provider or other third-party.

One or more communication units 719 of computing system 700 may communicate with devices external to computing system 700 by transmitting and/or receiving data, and may operate, in some respects, as both an input device and an output device. In some examples, communication units 719 may communicate with other devices over a network. In other examples, communication units 719 may send and/or receive radio signals on a radio network such as a cellular radio network. In other examples, communication units 719 of computing system 700 may transmit and/or receive satellite signals on a satellite network such as a Global Positioning System (GPS) network. Examples of communication units 719 include a network interface card (e.g., an Ethernet card), an optical transceiver, a radio frequency transceiver, a GPS receiver, or any other type of device that can send and/or receive information. Other examples of communication units 719 may include devices capable of communicating over Bluetooth^{®}, GPS, NFC, ZigBee, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth, NFC, or other technologies or protocols.

One or more input devices 722 may represent any input devices of computing system 700 not otherwise separately described herein. One or more input devices 722 may generate, receive, and/or process input from any type of device capable of detecting input from a human or machine. For example, one or more input devices 722 may generate, receive, and/or process input in the form of electrical, physical, audio, image, and/or visual input (e.g., peripheral device, keyboard, microphone, camera).

One or more output devices 723 may represent any output devices of computing system 700 not otherwise separately described herein. One or more output devices 723 may generate, receive, and/or process input from any type of device capable of detecting input from a human or machine. For example, one or more output devices 723 may generate, receive, and/or process output in the form of electrical and/or physical output (e.g., peripheral device, actuator).

One or more storage devices 721 within computing system 700 may store information for processing during operation of computing system 700. Storage devices 721 may store program instructions and/or data associated with one or more of the modules described in accordance with one or more aspects of this disclosure. One or more processors 720 and one or more storage devices 721 may provide an operating environment or platform for such modules, which may be implemented as software, but may in some examples include any combination of hardware, firmware, and software. One or more processors 720 may execute instructions and one or more storage devices 721 may store instructions and/or data of one or more modules. The combination of processors 720 and storage devices 721 may retrieve, store, and/or execute the instructions and/or data of one or more applications, modules, or software. Processors 720 and/or storage devices 721 may also be operably coupled to one or more other software and/or hardware components, including, but not limited to, one or more of the components of computing system 700 and/or one or more devices or systems illustrated as being connected to computing system 700.

In some examples, one or more storage devices 721 are temporary memories, meaning that a primary purpose of the one or more storage devices is not long-term storage. Storage devices 721 of computing system 700 may be configured for short-term storage of information as volatile memory and therefore not retain stored contents if deactivated. Examples of volatile memories include random access memories (RAM), dynamic random-access memories (DRAM), static random-access memories (SRAM), and other forms of volatile memories known in the art. Storage devices 721, in some examples, also include one or more computer-readable storage media. Storage devices 721 may be configured to store larger amounts of information than volatile memory. Storage devices 721 may further be configured for long-term storage of information as non-volatile memory space and retain information after activate/off cycles. Examples of non-volatile memories include magnetic hard disks, optical discs, Flash memories, or forms of electrically programmable memories (EPROM) or electrically erasable and programmable (EEPROM) memories.

Computing system 700 may provide conflict management for the specific applications 123. As described above, applications 123 may manage non-real time events within non-RT RIC 122, such as applications that do not require response times of less than one second. Applications 123 may leverage the functionality exposed via a non-RT RIC framework of computing device 700. Applications 123 may be used to control and manage RAN elements and resources, such as a near-RT RIC, RAN nodes, and/or resources in the O-RAN cloud. Applications 123 may provide one or more services that are performed using interfaces of computing system 700 (e.g., A1 interface, O1 interface, O2 interface, etc.). For example, applications 123 may include services such as policies 732 for a near-RT RIC, configuration instructions 734 for O-RAN managed elements, performance jobs 736 for O-RAN managed elements, services for managing the services and/or data 738, etc.

Computing system 800 may include one or more modules or units configured to perform one or more services or functions of applications 123, such as policy manager 158, O1 services manager 160, O2 services manager 162, service manager 163, data manager 155, and conflict manager 121, as described above.

For example, policy manager 158 is configured to control the deployment of policies (e.g., A1 services). For example, policy manager 158 may receive requests for A1 services from applications 123 (e.g., via R1 interface 154 of FIG. 1B), process the A1 services from applications 123, and perform the A1 services for a near-RT RIC using an A1 interface (e.g., A1 interface 164 of FIG. 1B). In some examples, the A1 interface may implement an A1AP application protocol based on the 3GPP framework.

O1 services manager 160 is configured to control the deployment of O1 services for monitoring the performance of O-RAN managed elements (e.g., near-RT RIC 124, O-CU 146, O-DU 148 of FIG. 1B). For example, O1 services manager 160 may receive requests for O1 services for monitoring the performance of the near-RT RIC from applications 123 (e.g., via R1 interface 154 of FIG. 1B), process the O1 services, and perform the O1 services for the O-RAN managed elements using an O1 interface (e.g., O1 interface 166 of FIG. 1B). In some examples, the O1 interface may implement REST/HTTPS APIs and/or NETCONF.

O1 services manager 160 is additionally, or alternatively, configured to control the deployment of O1 services for the configuration of near-RT RIC 124 and/or RAN nodes. For example, O1 services manager 160 may receive requests for O1 services for the configuration of O-RAN managed elements from applications 123 (e.g., via R1 interface 154 of FIG. 1B), process the O1 services, and may perform the O1 services for the O-RAN managed elements using an O1 interface (e.g., O1 interface 166 of FIG. 1B).

O2 services manager 162 may be configured to control the deployment of O2 services for monitoring the performance of resources of the O-RAN cloud. For example, O2 services manager 162 may receive requests for O2 services for monitoring the performance of resources within the O-RAN cloud (e.g., via R1 interface 154 of FIG. 1B), process the O2 services, and may perform the O2 services for the resources of the O-RAN cloud using an O2 interface (e.g., O2 interface 167 of FIG. 1B).

O2 services manager 162 may additionally, or alternatively, be configured to control the deployment of O2 services for the configuration of resources of the O-RAN cloud. For example, O2 services manager 162 may receive requests for O2 services for configuring resources within the O-RAN cloud from applications 123 (e.g., via R1 interface 154 of FIG. 1B), process the O2 services, and may perform the O2 services for the resources of the O-RAN cloud using an O2 interface (e.g., O2 interface 167 of FIG. 1B).

Service manager 163 is configured to manage services, such as registration of a service, update of a service registration, service discovery, etc. For example, service manager 163 may receive requests for SME services from applications 123 (e.g., via R1 interface 154 of FIG. 1B), perform the SME service (e.g., register/update a service) for one or more applications 123, and send a response to the one or more applications 123 using an R1 interface (e.g., R1 interface 154 of FIG. 1B).

Data manager 155 is configured to manage the data of applications 123. For example, data manager 155 may receive requests for DME services from applications 123 (e.g., via R1 interface 154 of FIG. 1B), perform the DME services (e.g., sending data from application configured as a data producer to application configured as a data consumer) for one or more applications 123, and send a response to the one or more applications 123 using an R1 interface (e.g., R1 interface 154 of FIG. 1B).

Computing system 700 includes conflict manager 121 configured to provide conflict management of services performed using interfaces of the non-RT RIC. In this example, conflict manager 121 includes an analysis engine 740, and action engine 742, and one or more conflict management rules 744.

In some examples, analysis engine 740 is configured to determine whether overlapping policies (e.g., where at least a portion of the scope of the policies overlap) include contradicting statements (e.g., objective/resource statements) of A1 services performed using the A1 interface. In some examples, analysis engine 740 is configured to determine whether requests to configure one or more O-RAN managed elements performed using the O1 interface or one or more resources of the O-RAN cloud performed using the O2 interface would cause a conflict (e.g., conflicting MOIs). In some examples, analysis engine 740 is configured to determine whether requests for performance jobs for one or more O-RAN managed elements performed using the O1 interface or one or more resources of the O-RAN cloud performed using the O2 interface would cause a conflict (e.g., overlapping IOCs and attributes, contradicts attribute value changes, specify different data networks, etc.). In some examples, analysis engine 740 is configured to determine whether requests to manage services performed using the R1 interface would cause a conflict (e.g., conflict with previously registered services or previously implemented application).

In response to determining that the service has a conflict, action engine 742 is configured to address the determined conflict. For example, action engine 742 may implement the services based on one or more conflict management rules 744. As described above, the conflict management rules 744 may include, for example, implementing a policy based on a first come, first served basis, implementing a policy from the application with a higher priority, implementing a policy based on scope of the policy, implementing a policy based on an IOC type or based on an IOC type and attribute of the IOC.

In some examples, a user may specify which conflict management rule to apply to address the conflict via user interface module (UI) 786. UI module 786 can generate data indicative of various user interface screens that graphically depict the conflict management rules UI module 786 can output, e.g., for display by a separate display device, the data indicative of the various user interface screens. UI module 786 can also output, for display, data indicative of graphical user interface elements that solicit input. Input may be, for example, a conflict management rule to be applied to a particular service, queries, or other input.

The techniques described in this disclosure may be implemented, at least in part, in hardware, software, firmware or any combination thereof. For example, various aspects of the described techniques may be implemented within one or more programmable processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media.

Thus, from one perspective, there have now been described techniques for providing conflict management of functions and services, for example, of a RAN intelligent controller (RIC). For example, a non-real time (non-RT) RIC comprises one or more processors and a memory coupled to the one or more processors, the memory storing instructions to cause the one or more processors to receive, from an application, a request to perform a service using an interface of the non-RT RIC. The instructions further cause the one or more processors to determine whether the service has a conflict. The instructions also cause the one or more processors to perform an action to address the conflict based on the determination that the service has a conflict.

Further examples of feature combinations taught by the present disclosure are set out in the following numbered clauses:
1. A non-real time (non-RT) Radio Access Network Intelligent Controller (RIC) for a radio access network (RAN), the RIC comprising:
   one or more processors; and
   a memory coupled to the one or more processors, the memory storing instructions to cause the one or more processors to:
      receive, from an application, a request to perform a service using an interface of the non-RT RIC;
      determine whether the service has a conflict; and
      perform an action to address the conflict based on the determination that the service has a conflict.
2. The non-RT RIC of clause 1, wherein the interface comprises an A1 interface, an O1 interface, an O2 interface, or an R1 interface of the non-RT RIC.
3. The non-RT RIC of clause 1 or 2,
   wherein to perform the action to mitigate the conflict, the instructions further cause the one or more processors to perform one or more of:
   allow implementation of the service;
   implement the service based on a first come, first served basis;
   implement the service based on a priority of the application; or
   implement the service based a scope of a policy of the service.
4. The non-RT RIC of any preceding clause, wherein the action is user configurable.
5. The non-RT RIC of any preceding clause,
   wherein, to determine whether the service has a conflict, the instructions further cause the one or more processors to:
   determine, based on a comparison of a first policy of the application with a second policy of the application or a different application, whether one or more statements of the first policy contradict one or more statements of the second policy, wherein at least a portion of the first policy and the second policy overlap.
6. The non-RT RIC of any preceding clause,
   wherein, to determine whether the service has a conflict, the instructions further cause the one or more processors to:
   determine whether one or more statements within a policy of the application exceeds a limit of a target of the policy.
7. The non-RT RIC of any preceding clause,
   wherein the service comprises a first service, and
   wherein the instructions further cause the one or more processors to:
      receive, from a second application of the one or more applications, a request for conflict guidance for a second service using the interface of the non-RT RIC;
      determine whether the second service has a conflict; and
      provide a guidance response to the second application based on the determination that the second service has a conflict.
8. The non-RT RIC of clause 7, wherein the guidance response comprises one or more of:
   an indication on whether the second service creates a conflict;
   one or more recommendations to resolve the conflict; or
   information identifying a cause of the conflict.
9. The non-RT RIC of any preceding clause,
   wherein, to determine whether the service has a conflict, the instructions further cause the one or more processors to:
   determine, based on a comparison of a first request of the application to configure an O-RAN managed element with a second request of the application or a different application to configure the O-RAN managed element, whether the first request to configure the O-RAN managed element contradicts the second request to configure the O-RAN managed element.
10. The non-RT RIC of any preceding clause,
   wherein, to determine whether the service has a conflict, the instructions further cause the one or more processors to:
   determine, based on a comparison of a first request of the application for a performance job of an O-RAN managed element with a second request of the application or a different application for a performance job of the O-RAN managed element, whether the first request for the performance job of the O-RAN managed element contradicts the second request for the performance job of the O-RAN managed element.
11. The non-RT RIC of any preceding clause,
   wherein, to determine whether the service has a conflict, the instructions further cause the one or more processors to:
   determine, based on a comparison of a first request of the application for a first configuration management service to configure a physical infrastructure node that hosts O-RAN functions with a second request of the application or a different application for a second configuration management service to configure the physical infrastructure node, whether the first request contradicts the second request.
12. The non-RT RIC of any preceding clause,
   wherein, to determine whether the service has a conflict, the instructions further cause the one or more processors to:
   determine, based on a comparison of a first request of the application for a first performance management service to monitor performance of a physical infrastructure node that hosts O-RAN functions with a second request of the application or a different application for a second performance management service to monitor performance of the physical infrastructure node, whether the first request contradicts the second request.
13. The non-RT RIC of any preceding clause,
   wherein, to determine whether the service has a conflict, the instructions further cause the one or more processors to:
   determine, based on a comparison of a first configuration request of the application with a second configuration request of the application or a different application, whether a target distinguished name (DN) of the first configuration request overlaps a target DN of the second configuration request; and
   determine, based on the comparison of the first configuration request of the application with the second configuration request of the application or a different application, whether a Managed Object Instance (MOI) and attribute of the MOI of the first configuration request overlaps with an MOI and attribute of the MOI of the second configuration request.
14. The non-RT RIC of any preceding clause,
   wherein, to determine whether the service has a conflict, the instructions further cause the one or more processors to:
   determine, based on a comparison of a first configuration request of the application with a second configuration request of the application or a different application, whether an attribute value of a Managed Object Instance (MOI) of the first configuration request is different than an attribute value of an MOI of the second configuration request.
15. The non-RT RIC of any preceding clause, wherein to determine whether the service has a conflict, the one or more processors are configured to determine whether the service has at least one of a direct conflict, an indirect conflict, or an implicit conflict.
16. A method comprising:
   receiving, by a non-real time (non-RT) Radio Access Network Intelligent Controller (RIC) for managing non-real time events of a radio access network (RAN) and from an application, a request to perform a service using an interface of the non-RT RIC;
   determining, by the RIC, whether the service has a conflict; and
   performing, by the RIC, an action to address the conflict based on the determination that the service has a conflict.
17. The method of clause 16, wherein the interface comprises an A1 interface, an O1 interface, an O2 interface, or an R1 interface of the non-RT RIC.
18. Non-transitory computer-readable storage media that comprises instructions that, when executed, cause one or more processors of a non-real time (non-RT) Radio Access Network Intelligent Controller (RIC) for managing non-real time events of a radio access network (RAN) to:
   receive, from an application, a request to perform a service using an interface of the non-RT RIC;
   determine whether the service has a conflict; and
   an action to address the conflict based on the determination that the service has a conflict.
19. The non-transitory computer-readable storage media of clause 18, wherein the interface comprises an A1 interface, an O1 interface, an O2 interface, or an R1 interface of the non-RT RIC.
20. The non-transitory computer-readable storage media of clause 18 or 19,
   wherein to perform the action to mitigate the conflict, the instructions further cause the one or more processors to perform one or more of:
   allow implementation of the service;
   implement the service based on a first come, first served basis;
   implement the service based on a priority of the application; or
   implement the service based a scope of a policy of the service.

## Claims

1. A non-real time, non-RT, Radio Access Network Intelligent Controller, RIC, for a radio access network, RAN, the RIC comprising:
one or more processors; and
a memory coupled to the one or more processors, the memory storing instructions to cause the one or more processors to:
receive, from an application, a request to perform a service using an interface of the non-RT RIC;
determine whether the service has a conflict; and
perform an action to address the conflict based on the determination that the service has a conflict.

2. The non-RT RIC of claim 1, wherein the interface comprises an A1 interface, an O1 interface, an O2 interface, or an R1 interface of the non-RT RIC.

3. The non-RT RIC of any of claims 1-2,
wherein to perform the action to mitigate the conflict, the instructions further cause the one or more processors to perform one or more of:
allow implementation of the service;
implement the service based on a first come, first served basis;
implement the service based on a priority of the application; or
implement the service based a scope of a policy of the service.

4. The non-RT RIC of any of claims 1-3,
wherein, to determine whether the service has a conflict, the instructions further cause the one or more processors to:
determine, based on a comparison of a first policy of the application with a second policy of the application or a different application, whether one or more statements of the first policy contradict one or more statements of the second policy, wherein at least a portion of the first policy and the second policy overlap.

5. The non-RT RIC of any of claims 1-4,
wherein, to determine whether the service has a conflict, the instructions further cause the one or more processors to:
determine whether one or more statements within a policy of the application exceeds a limit of a target of the policy.

6. The non-RT RIC of any of claims 1-5,
wherein the service comprises a first service, and
wherein the instructions further cause the one or more processors to:
receive, from a second application of the one or more applications, a request for conflict guidance for a second service using the interface of the non-RT RIC;
determine whether the second service has a conflict; and
provide a guidance response to the second application based on the determination that the second service has a conflict.

7. The non-RT RIC of claim 6, wherein the guidance response comprises one or more of:
an indication on whether the second service creates a conflict;
one or more recommendations to resolve the conflict; or
information identifying a cause of the conflict.

8. The non-RT RIC of any of claims 1-7,
wherein, to determine whether the service has a conflict, the instructions further cause the one or more processors to:
determine, based on a comparison of a first request of the application to configure an O-RAN managed element with a second request of the application or a different application to configure the O-RAN managed element, whether the first request to configure the O-RAN managed element contradicts the second request to configure the O-RAN managed element.

9. The non-RT RIC of any of claims 1-8,
wherein, to determine whether the service has a conflict, the instructions further cause the one or more processors to:
determine, based on a comparison of a first request of the application for a performance job of an O-RAN managed element with a second request of the application or a different application for a performance job of the O-RAN managed element, whether the first request for the performance job of the O-RAN managed element contradicts the second request for the performance job of the O-RAN managed element.

10. The non-RT RIC of any of claims 1-9,
wherein, to determine whether the service has a conflict, the instructions further cause the one or more processors to:
determine, based on a comparison of a first request of the application for a first configuration management service to configure a physical infrastructure node that hosts O-RAN functions with a second request of the application or a different application for a second configuration management service to configure the physical infrastructure node, whether the first request contradicts the second request.

11. The non-RT RIC of any of claims 1-10,
wherein, to determine whether the service has a conflict, the instructions further cause the one or more processors to:
determine, based on a comparison of a first request of the application for a first performance management service to monitor performance of a physical infrastructure node that hosts O-RAN functions with a second request of the application or a different application for a second performance management service to monitor performance of the physical infrastructure node, whether the first request contradicts the second request.

12. The non-RT RIC of any of claims 1-11,
wherein, to determine whether the service has a conflict, the instructions further cause the one or more processors to:
determine, based on a comparison of a first configuration request of the application with a second configuration request of the application or a different application, whether a target distinguished name, DN, of the first configuration request overlaps a target DN of the second configuration request; and
determine, based on the comparison of the first configuration request of the application with the second configuration request of the application or a different application, whether a Managed Object Instance, MOI, and attribute of the MOI of the first configuration request overlaps with an MOI and attribute of the MOI of the second configuration request.

13. The non-RT RIC of any of claims 1-12,
wherein, to determine whether the service has a conflict, the instructions further cause the one or more processors to:
determine, based on a comparison of a first configuration request of the application with a second configuration request of the application or a different application, whether an attribute value of a Managed Object Instance, MOI, of the first configuration request is different than an attribute value of an MOI of the second configuration request.

14. A method comprising:
receiving, by a non-real time, non-RT, Radio Access Network Intelligent Controller, RIC, for managing non-real time events of a radio access network, RAN, and from an application, a request to perform a service using an interface of the non-RT RIC;
determining, by the RIC, whether the service has a conflict; and
performing, by the RIC, an action to address the conflict based on the determination that the service has a conflict.

15. A computer readable medium comprising computer-implementable instructions for causing a computer to become configured as the non-RT RIC of claims 1-13 or to perform the method of claim 14.
